# EUROPÄISCHE PATENTSCHRIFT

(11) **EP 4 149 687 B1**
(45) Veröffentlichungstag und Bekanntmachung des Hinweises auf die Patenterteilung: **05.08.2026**
(21) Anmeldenummer: 21723107.5
(22) Anmeldetag: 26.04.2021
(51) Int. Cl.: B02C 23/12, B02C 25/00, B07B 1/50, B02C 13/00

(54) **VERFAHREN ZUR KLEMMKORNABREINIGUNG BEI BRECHERN**
METHOD FOR REMOVING BLOCKING GRAINS IN CRUSHERS
PROCÉDÉ POUR ENLEVER DES GRAINS BLOQUANTS DANS CONCASSEURS

(30) Priorität: 13.05.2020 AT 504192020
(43) Veröffentlichungstag der Anmeldung: 22.03.2023
(73) Patentinhaber: Rubble Master HMH GmbH, 4030 Linz (AT)
(72) Erfinder: HINTERDORFER, Christian, 4293 Gutau (AT); HINTERREITER, Christian, 4593 Obergrünburg (AT)
(74) Vertreter: Hübscher & Partner Patentanwälte GmbH
(86) Internationale Anmeldenummer: PCT/AT2021/060140
(87) Internationale Veröffentlichungsnummer: WO 2021/226643

(56) Entgegenhaltungen:
- EP-A1- 0 801 995
- EP-A2- 0 426 651
- WO-A1-2020/049517
- CN-U- 210 411 038
- DE-U1- 8 106 180

## Beschreibung

### Technisches Gebiet

Die Erfindung bezieht sich auf ein Verfahren zur Klemmkornabreinigung bei Brechern, wobei Brechgut über einen Zuförderstrom einem Brechwerkzeug zugeführt und von dort über ein Sieb in einen durch das Sieb durchtretenden Abförderstrom und in einen vom Sieb zurückgehaltenen, in den Zuförderstrom unter Ausbildung eines Förderkreislaufs rückgeführten Rückführstrom aufgeteilt wird.

### Stand der Technik

Bei der industriellen Aufbereitung von mineralischem Brechgut zu Feinkorn kommen insbesondere Brecher, beispielsweise mobile Prallbrecher zum Einsatz. Dabei wird das Brechgut über einen Zuförderstrom einem sich in der Regel zwischen einer Prallplatte und einer Schlagleiste bildenden Brechspalt in einer Prallkammer zugeführt und von dort über ein Sieb in einen durch das Sieb durchtretenden Abförderstrom und in einen vom Sieb zurückgehaltenen, in den Zuförderstrom rückgeführten Rückführstrom aufgeteilt. In den Rückführstrom gelangt insbesondere unvollständig zerkleinertes Brechgut, welches die Siebmaschen größenbedingt nicht passieren kann und dem Brechspalt daher erneut zugeführt werden muss. Im Zuge eines derartigen Aufbereitungsprozesses kann es allerdings regelmäßig zu einem Siebmaschenverschluss durch etwaiges, unzureichend zerkleinertes Brechgut kommen, sodass sich die effektive Siebfläche verkleinert. Durch den Siebmaschenverschluss wird zufolge dieses sogenannten Klemmkorns die Effizienz des Brechers deutlich herabgesenkt, woraus in weiterer Folge ein wirtschaftlicher Nachteil für den Maschinenbetreiber erwächst. EP 0426651 A2 offenbart eine Anlage mit einem Prallbrecher und einem Sieb.

Um derartiges Klemmkorn im laufenden Brecherbetrieb aus den Siebmaschen zu entfernen, wurden bereits Verfahren vorgeschlagen (DE 102011001221 A1, DE 8106180 U1), wobei mithilfe von an der Siebfläche angeordneten Klopfkörpern die Siebmaschen freigeklopft werden. Allerdings verringert sich durch das Vorsehen solcher Klopfkörper die zur Verfügung stehende freie Siebfläche und somit letztlich die Ausbeute an produziertem Feinkorn. Zudem ist für den Betrieb der Klopfkörper ein zusätzlicher Energieeintrag nötig, sodass sich der Brecherbetrieb trotz regelmäßig freigeklopfter Siebfläche insgesamt als wenig effizient erweist.

Darüber hinaus ist es im Zusammenhang mit Siebmaschinen bekannt (DE 20008762 U1), die Schwingweite des Siebes während des Betriebes kurzfristig zu erhöhen, sodass das Sieb mit Vibrationen höherer Amplitude beaufschlagt wird. Allerdings sind die durch die Vibrationen des Siebes auf das Klemmkorn übertragenen Impulse in der Regel zu gering, um ein zuverlässiges Abreinigen der Siebmaschen zu ermöglichen. Dies führt dazu, dass der Maschinenführer trotz erfolgter Schwingweitenmodulation bei entsprechend starkem Siebmaschenverschluss den Maschinenbetrieb dennoch temporär einstellen muss, um händisch Klemmkorn von den Siebmaschen zu entfernen.

### Darstellung der Erfindung

Der Erfindung liegt somit die Aufgabe zugrunde, ein Verfahren der eingangs geschilderten Art so auszugestalten, dass insgesamt ein effizienter, durchgehender Brecherbetrieb ermöglicht wird, wobei insbesondere Stehzeiten zur Klemmkornabreinigung entfallen können.

Die Erfindung löst die gestellte Aufgabe dadurch, dass im Förderkreislauf und / oder im Abförderstrom abschnittsweise in vorgegebenen Zeitschritten das Materialvolumen und / oder die Korngrößenverteilung bestimmt wird und beim Abweichen von Materialvolumen und / oder Korngrößenverteilung über einen vorgegebenen Grenzwert die durch das Brechwerkzeug erzeugte Korngröße für einen vorgegebenen Zeitraum vergrößert wird.

Durch die Vergrößerung der Korngröße im Falle eines Abweichens von Materialvolumen und / oder Korngrößenverteilung über einen vorgegebenen Grenzwert wird gezielt innerhalb des vorgegebenen Zeitraums durch das Brechwerkzeug Grobkorn erzeugt, das über den Rückführ- und den Zuförderstrom der Prallkammer fortlaufend in einem Förderkreislauf so zugeführt wird, dass die Siebmaschen durch die Impulsbeaufschlagung des auftreffenden Grobkorns freigeschlagen werden. Das temporär erzeugte Grobkorn übernimmt somit im Wesentlichen die Aufgabe eines frei beweglichen Klopfkörpers, wobei allerdings durch die Rückführung des Grobkorns in den Rückführstrom eine Verringerung der effektiven Siebfläche im Normalbetrieb vermieden wird. Besonders vorteilhaft ist hierbei, dass das zunächst als Klopfkörper fungierende Grobkorn nach erfolgter Klemmkornabreinigung letzlich wieder als Brechgut zur Verfügung steht, das zu Feinkorn gebrochen werden kann. Wird daher der Brechspalt nach Ablauf des vorgegebenen Zeitraums wieder auf den initialen bzw. einen kleineren Wert eingestellt, kann auch das zuvor erzeugte Grobkorn wieder zerkleinert werden und gelangt schließlich durch das abgereinigte Sieb als Feinkorn in den Abförderstrom. Dadurch, dass aufgrund des erfindungsgemäßen Verfahrens eine wirksame Klemmkornabreinigung bei laufendem Brecherbetrieb ermöglicht wird, entfallen nicht nur Stehzeiten zur manuellen Reinigung der Siebmaschen, sondern auch die sonst hierfür notwendigen, mitunter sehr energieaufwändigen Abschalt- und Anfahrvorgänge des Brechers. Folglich schafft das erfindungsgemäße Verfahren die Voraussetzung für einen, insbesondere in wirtschaftlicher Hinsicht, effizienten Brecherbetrieb.

Vorzugsweise wird abschnittsweise in vorgegebenen Zeitschritten die Korngrößenverteilung im Rückführstrom bestimmt. Da sich gezeigt hat, dass im Rückführstrom eine Verschiebung der Korngrößenverteilung hin zu kleineren Korngrößen unmittelbar mit einer Zunahme des Siebmaschenverschlusses korreliert, können entsprechende Korngrößenverteilungen ermittelt und daraus eine untere Korngrößengrenze als Grenzwert zur Einleitung der temporären Erhöhung der Korngröße festgelegt werden.

Wird im Abförderstrom abschnittsweise in vorgegebenen Zeitschritten das Materialvolumen und / oder die Korngrößenverteilung bestimmt, können auch Schäden im Sieb, beispielsweise zufolge ausgerissener Siebmaschen, bestimmt werden. Dieser Siebschädenbestimmung liegt die Erkenntnis zugrunde, dass im Abförderstrom eine Erhöhung des Materialvolumens und / oder eine Verschiebung der Korngrößenverteilung hin zu größeren Korngrößen regelmäßig auf Schäden im Sieb zurückzuführen ist, weil das Sieb beispielsweise durch ausgerissene Siebmaschen zusätzliche Durchtrittsöffnungen für größere Körner bildet, sodass diese leichter in den Abförderstrom gelangen können.

In der Praxis führt nicht nur Klemmkorn zu ungewollten Siebmaschenverschlüssen, sondern es können auch Störstoffe wie beispielsweise Plastik- oder Holzabfälle, die insbesondere im Falle von Bauschutt als zugeführtem Brechgut in den Brecherprozess gelangen können, das Sieb verstopfen. Das erfindungsgemäße Verfahren ermöglicht auch in diesem Zusammenhang, dass die Siebmaschen wirksam von etwaigen Störstoffen freigeschlagen werden können, die anschließend vom Materialstrom abgezogen werden können.

Um eine noch effektivere Klemmkornabreinigung des Siebes zu ermöglichen empfiehlt es sich, dass beim Abweichen von Materialvolumen und / oder Korngrößenverteilung über einen vorgegebenen Grenzwert die Zufördergeschwindigkeit innerhalb des vorgegebenen Zeitraumes verringert wird. Insbesondere für den Fall einer Erhöhung des Materialvolumens im Förderkreislauf wird durch die verringerte Zufördergeschwindigkeit eine Überlastung des Siebes zufolge eines Materialstaus vermieden, sodass das Grobkorn unmittelbar auf das Sieb für eine gute Impulsübertragung auftreffen kann. Im Falle einer Vibrationsförderrinne als Zufördereinheit zum Brechwerkzeug kann die Zufördergeschwindigkeit beispielsweise durch Verringerung der Rinnenfrequenz verringert werden.

Die Klemmkornabreinigung kann weiter dadurch begünstigt werden, dass beim Abweichen von Materialvolumen und / oder Korngrößenverteilung über einen vorgegebenen Grenzwert die Rotordrehzahl des Brechers innerhalb des vorgegebenen Zeitraumes verringert wird. Die durch diese Maßnahmen geringer ausfallende Rotationsenergie des zusammen mit den Prallplatten in der Prallkammer angeordneten Rotors führt dazu, dass das Brechgut ebenfalls mit einer geringeren kinetischen Energie bzw. geringeren Impulsen durch die umfangsseitig am Rotor angeordneten und radial von diesem abstehenden Schlagleisten beaufschlagt wird. Dadurch kann zusammen mit einer Vergrößerung des Brechspaltes, also des Minimalabstandes zwischen einer Schlagleiste und einer Prallplatte, die Ausbildung von größeren Grobkornstücken innerhalb des vorgegeben Zeitraums begünstigt werden. Das Grobkorn erleichtert dabei aufgrund seiner massenbedingt höheren kinetischen Energie in weiterer Folge die Klemmkornabreinigung des Siebes.

Die Klemmkornabreinigung kann darüber hinaus auch über die Modulation der Schwingweite des Siebes bzw. der Frequenz des Siebes verbessert werden. Dabei können hierfür insbesondere die Schwingungsamplitude und /oder die Frequenz des Siebes erhöht werden.

Grundsätzlich können zur in-situ Bestimmung der Korngrößenverteilung bzw. des Materialvolumens bekannte photogrammetrische Verfahren, die beispielsweise mithilfe einer Stereokamera und Lasertriangulation realisiert werden, zum Einsatz kommen. Nachteilig daran ist allerdings deren begrenzte Erfassungs- und Verarbeitungsgeschwindigkeit, sodass für eine zuverlässige Bestimmung der Korngrößenverteilung bzw. des Materialvolumens die Fördergeschwindigkeiten der Materialströme bzw. die Bandgeschwindigkeit der Fördereinheit entsprechend reduziert werden müssen. Selbst bei aufwändigen Systemen, die einen großen Platzbedarf aufweisen, können so nur Bandgeschwindigkeiten von unter 2 m/s erreicht werden. Dadurch verringert sich allerdings insgesamt auch der Durchsatz und somit die Effizienz des Brecherprozesses. Darüber hinaus dürfen sich bei derartigen Verfahren die Körner auf der Fördereinheit nicht überlappen, was allerdings im realistischen Förderbetrieb unvermeidbar ist.

Um vor diesem Hintergrund Brechgut auch bei Überlappungen zuverlässig bei Fördergeschwindigkeiten von mehr als 2 m/s zu klassifizieren, ohne dass hierfür konstruktiv aufwendige Maßnahmen getroffen werden müssen, wird vorgeschlagen, dass abschnittsweise ein Tiefenbild des Förderkreislaufs und / oder des Abförderstromes mit einem Tiefensensor erfasst wird, wobei das erfasste zweidimensionale Tiefenbild einem vorab trainierten, faltenden neuronalen Netzwerk zugeführt wird, das wenigstens drei hintereinanderliegende Faltungsebenen, sogenannte convolution layer, aufweist, denen je Klasse einer Korngrößenverteilung ein Mengenklassifizierer und / oder ein Volumenklassifizierer nachgelagert ist , wobei sowohl Mengen- als auch Volumenklassifizierer beispielsweise als ein sogenannter fully connected layer ausgeführt sein können und wobei die Ausgangswerte von Mengenklassifizierer und / oder Volumenklassifizierer als die im Erfassungsbereich vorhandene Korngrößenverteilung und / oder als Materialvolumen ausgegeben werden. Dabei liegt die Überlegung zugrunde, dass bei der Verwendung von zweidimensionalen Tiefenbildern die zur Korngrößenverteilungs- und Volumenbestimmung notwendigen Informationen aus den Tiefeninformationen extrahiert werden können, nachdem ein hierfür eingesetztes neuronales Netzwerk mit Trainingstiefenbildern mit bekannter Korngrößenverteilung und bekanntem Materialvolumen trainiert wurde. Die Faltungsebenen reduzieren dabei die Eingangstiefenbilder zu einer Reihe von Einzelmerkmalen, die wiederum vom nachgelagerten Mengenklassifizierer und / oder Volumenklassifizierer bewertet werden, sodass im Ergebnis die Korngrößenverteilung und / oder das Gesamtvolumen des im Eingangstiefenbild abgebildeten Materials ermittelt werden kann. Die Anzahl der vorgesehenen Faltungsebenen, die jeweils von einer Pooling-Ebene zur Informationsreduktion gefolgt sein können, kann je nach verfügbarer Rechenleistung bei wenigstens drei, vorzugsweise bei fünf, liegen. Zwischen den Faltungsebenen und dem nachgelagerten Volumenklassifizierer kann in bekannter Weise eine Ebene zur Dimensionsreduktion, ein sogenannter flattening layer, vorgesehen sein. Das Volumen muss daher nicht mehr für jedes einzelne Korn berechnet werden. Da im Tiefenbild je Bildpunkt der Abstand des abgebildeten Materials zum Tiefensensor mit nur einem Wert abgebildet wird, kann im Gegensatz zur Verarbeitung von Farbbildern die zu verarbeitende Datenmenge reduziert, das Messverfahren beschleunigt und der für das neuronale Netzwerk erforderliche Speicherbedarf verringert werden. Dadurch kann das neuronale Netzwerk auf günstigen KI-Parallelrecheneinheiten mit GPU-Unterstützung implementiert und das Verfahren unabhängig von der Farbe des Schüttgutes eingesetzt werden. Auch kann das Materialvolumen durch die Beschleunigung des Messverfahrens selbst bei Förderbandgeschwindigkeiten von 3m/s, bevorzugter Weise 4m/s, bestimmt werden. Die genannte Reduktion der Datenmenge im Tiefenbild und damit im neuronalen Netzwerk senkt zusätzlich die Fehleranfälligkeit für die korrekte Bestimmung der Korngrößenverteilung und des Materialvolumens. Die Verwendung von Tiefenbildern hat im Gegensatz zu Farb- oder Graustufenbildern den zusätzlichen Vorteil, dass das Messverfahren weitgehend unabhängig von sich ändernden Belichtungsbedingungen ist. Als neuronales Netzwerk kann beispielsweise ein üblicherweise nur für Farbbilder verwendetes vgg16 Netzwerk (Simonyan / Zisserman, Very Deep Convolutional Networks for Large-Scale Image Recognition, 2015) zum Einsatz kommen, das lediglich auf einen Kanal, nämlich für die Werte der Tiefenbildpunkte, reduziert ist. Das Tiefenbild kann beispielsweise mit einer 3D-Kamera erfasst werden, da diese aufgrund des geringeren Platzbedarfes auch bei geringem Raumangebot beispielsweise oberhalb von Förderbändern des Förderkreislaufs und /oder des Abförderstromes angeordnet werden kann. Um Schwankungen bei der Erfassung der Korngrößenverteilung und / oder des Volumens auszugleichen und fehlerhafte Ausgabewerte des neuronalen Netzwerkes zu kompensieren, können darüber hinaus mehrere aufeinanderfolgende Ausgangswerte gemittelt und der Mittelwert als die im Erfassungsbereich vorhandene Korngrößenverteilung und / oder als das im Erfassungsbereich vorhandene Materialvolumen ausgegeben werden.

Das Trainieren des neuronalen Netzwerks wird erschwert und die Messgenauigkeit nimmt im laufenden Betrieb ab, wenn brechgutfremde Elemente im Erfassungsbereich des Tiefensensors liegen. Dazu zählen beispielsweise vibrierende Bauteile eines Förderbandes selbst, oder aber andere Maschinenelemente. Zur Vermeidung der daraus entstehenden Störungen wird vorgeschlagen, dass aus dem Tiefenbild und/oder dem Trainingstiefenbild die Werte jener Bildpunkte entfernt werden, deren Tiefe einem vorab erfassten Abstand zwischen Tiefensensor und einem Hintergrund für diesen Bildpunkt entspricht oder diesen Abstand überschreitet. Dadurch können störende Bildinformationen, hervorgerufen beispielsweise durch Vibrationen des Förderbandes, entfernt und sowohl die Tiefenbilder als auch die Trainingstiefenbilder auf die für die Vermessung relevanten Informationen beschränkt werden.

Das Training des neuronalen Netzwerks erfordert große Mengen an Trainingstiefenbildern, die das zu erfassende Material möglichst exakt repräsentieren. Der Arbeitsaufwand um die notwendige Menge an Material zu vermessen ist allerdings extrem hoch. Um dem neuronalen Netz dennoch ausreichende Trainingstiefenbilder zur Verfügung zu stellen, um das Materialvolumen zu bestimmen, wird vorgeschlagen, dass zunächst Beispieltiefenbilder je eines Beispielkornes mit bekanntem Volumen erfasst und gemeinsam mit dem Volumen abgespeichert werden, wonach mehrere Beispieltiefenbilder zufällig zu einem Trainingstiefenbild zusammengesetzt werden, dem als Korngrößenverteilung die klassenweise Verteilung der Materialvolumina der zusammengesetzten Beispieltiefenbilder und / oder als Materialvolumen die Summe der Volumina der zusammengesetzten Beispieltiefenbilder zugeordnet wird, wonach das Trainingstiefenbild eingangsseitig und die zugeordnete Korngrößenverteilung und / oder das zugeordnete Materialvolumen ausgangsseitig dem neuronalen Netzwerk zugeführt und die Gewichte der einzelnen Netzwerkknoten in einem Lernschritt angepasst werden. Der Trainingsmethode liegt also die Überlegung zugrunde, dass durch die Kombination von Beispieltiefenbildern vermessener Beispielkörner mannigfaltige Kombinationen an Trainingstiefenbildern erstellt werden können. Es genügt also, Beispieltiefenbilder verhältnismäßig weniger Beispielkörner mit ihrem Volumen zu erfassen, um eine große Anzahl an Trainingstiefenbildern zu generieren, mit denen das neuronale Netzwerk trainiert werden kann. Zum Training des neuronalen Netzwerks werden in den einzelnen Trainingsschritten in bekannter Weise die Gewichte zwischen den einzelnen Netzwerkknoten so angepasst, dass der tatsächliche Ausgabewert dem vorgegebenen Ausgabewert am Ende des neuronalen Netzwerks ehestmöglich entspricht. Dabei können an den Netzwerkknoten unterschiedliche Aktivierungsfunktionen vorgegeben werden, die dafür maßgeblich sind, ob ein am Netzwerkknoten anliegender Summenwert an die nächste Ebene des neuronalen Netzwerks weitergegeben wird. Analog zum Volumen können den Beispieltiefenbildern auch andere Parameter, wie beispielsweise die Korngrößenverteilung der im Beispieltiefenbild abgebildeten Körner zugewiesen werden. Zur Tiefenbildverarbeitung wird auch hier vorgeschlagen, dass aus dem Tiefenbild die Werte jener Bildpunkte entfernt werden, deren Tiefe einem vorab erfassten Abstand zwischen Tiefensensor und dem Hintergrund für diesen Bildpunkt entspricht oder diesen Abstand überschreitet. Dadurch weisen die Trainingstiefenbilder und die Tiefenbilder des gemessenen Materials nur die für die Vermessung relevanten Informationen auf, wodurch ein stabileres Trainingsverhalten erreicht und die Erkennungsrate bei der Anwendung erhöht wird. Über die Auswahl der Beispiel- bzw. der aus ihnen zusammengesetzten Trainingstiefenbilder kann das neuronale Netz auf beliebige Arten von Schüttgut trainiert werden.

Um das Trainingsverhalten und die Erkennungsrate weiter zu verbessern, wird vorgeschlagen, dass die Beispieltiefenbilder mit zufälliger Ausrichtung zu einem Trainingstiefenbild zusammengesetzt werden. Dadurch wird bei gegebener Anzahl an Körnern pro Beispieltiefenbild die Anzahl an möglichen Anordnungen der Körner deutlich erhöht, ohne dass mehr Beispieltiefenbilder generiert werden müssen und eine Überanpassung des neuronalen Netzwerks wird vermieden.

Eine Vereinzelung der Körner des Materials kann entfallen und größere Materialvolumina können bei gleichbleibender Fördergeschwindigkeit des Förderbandes bestimmt werden, wenn die Beispieltiefenbilder mit teilweisen Überlappungen zu einem Trainingstiefenbild zusammengesetzt werden, wobei der Tiefenwert des Trainingstiefenbilds im Überlappungsbereich der geringsten Tiefe beider Beispieltiefenbilder entspricht. Um realistische Materialverteilungen zu erfassen, müssen die Fälle berücksichtigt werden, in denen zwei Körner aufeinander zu liegen kommen. Das neuronale Netzwerk kann dahingehend trainiert werden, dass es solche Überlappungen erkennt, und das Volumen der Beispielkörner trotzdem ermitteln kann.

### Kurze Beschreibung der Erfindung

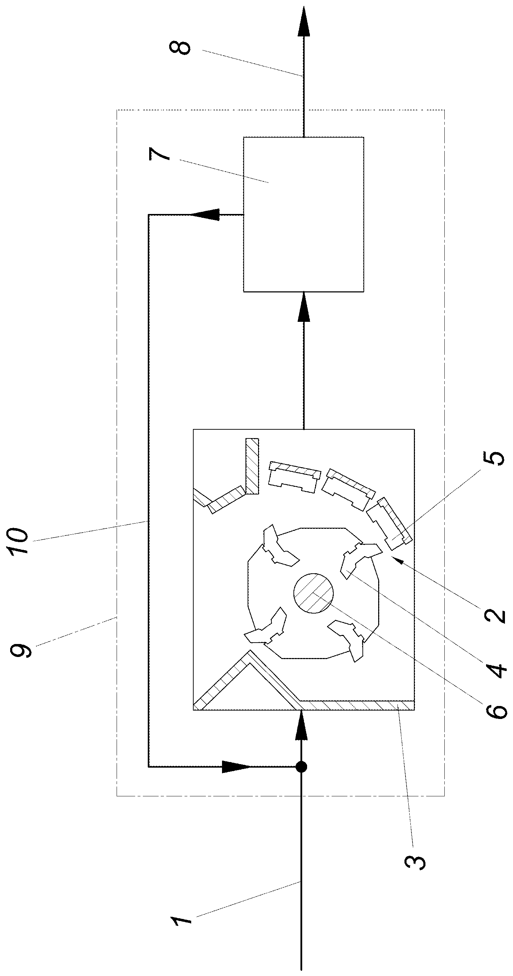

In der Zeichnung ist der Erfindungsgegenstand beispielsweise dargestellt und zwar in einem schematischen Flussdiagramm eines erfindungsgemäßen Verfahrens mit einer schematischen Schnittansicht einer Prallkammer.

### Wege zur Ausführung der Erfindung

Einem erfindungsgemäßen Verfahren zur Klemmkornabreinigung bei Brechern liegt beispielsweise ein Aufbereitungsprozess von mineralischem Brechgut zu Feinkorn zugrunde, wobei das nicht näher dargestellte Brechgut über einen Zuförderstrom 1 einem Brechspalt 2 eines Brechwerkzeugs zugeführt wird. Wie dies in der Zeichnung schematisch angedeutet wird, bildet sich der Brechspalt 2 in einer Prallkammer 3 zwischen einer Schlagleiste 4 und einer Prallplatte 5. Der Brechspalt ist somit als Minimalabstand zwischen einer auf einem Rotor 6 angeordneten Schlagleiste 4 und einer Prallplatte 5 zu verstehen. Vom Brechspalt 2 wird der Zuförderstrom 1 über ein Sieb 7 in einen durch das Sieb 7 durchtretenden Abförderstrom 8 und in einen vom Sieb 7 zurückgehaltenen, in den Zuförderstrom 1 unter Ausbildung eines durch eine strichpunktierte Umrahmung angedeuteten Förderkreislaufs 9 rückgeführten Rückführstrom 10 aufgeteilt.

Im Brecherbetrieb wird im Förderkreislauf 9 und / oder im Abförderstrom 8 abschnittsweise in vorgegebenen Zeitschritten das Materialvolumen und / oder die Korngrößenverteilung bestimmt. Beispielsweise hat sich gezeigt, dass in dem im Förderkreislauf 9 liegenden Rückführstrom 10 eine Verschiebung der Korngrößenverteilung hin zu kleineren Korngrößen unmittelbar mit einer Zunahme des Siebmaschenverschlusses korreliert. Dadurch können entsprechende Siebkennlinien ermittelt und daraus eine untere Korngrößengrenze als Grenzwert zur Einleitung der Klemmkornabreinigung festgelegt werden.

So wird beispielsweise beim Abweichen der Korngrößenverteilung im Rückführstrom 10 über den vorgegebenen Grenzwert der Brechspalt 2 für einen vorgegebenen Zeitraum vergrößert. Zufolge des größeren Brechspaltes 2 kann gezielt innerhalb des vorgegebenen Zeitraums Grobkorn erzeugt werden, das über den Rückführstrom 10 und den Zuförderstrom 1 der Prallkammer 3 fortlaufend im Förderkreislauf 9 so zugeführt, dass die Siebmaschen des Siebes 7 durch die Impulsbeaufschlagung des auftreffenden Grobkorns freigeschlagen werden. Nach Ablauf des vorgegebenen Zeitraums wird der Brechspalt 2 wieder auf den initialen bzw. einen kleineren Wert eingestellt, sodass auch das zuvor erzeugte Grobkorn wieder zerkleinert werden kann und schließlich durch das abgereinigte Sieb 7 als Feinkorn in den Abförderstrom 8 gelangt.

Um eine noch effektivere Klemmkornabreinigung des Siebes 7 zu ermöglichen, kann beim Abweichen von Materialvolumen und / oder Korngrößenverteilung über einen vorgegebenen Grenzwert die Zufördergeschwindigkeit innerhalb des vorgegebenen Zeitraumes verringert werden. Analog dazu kann auch die Geschwindigkeit des Rotors 6 verringert werden. Die durch diese Maßnahme geringer ausfallende Rotationsenergie des zusammen mit den Prallplatten 5 in der Prallkammer 3 angeordneten Rotors 6 führt dazu, dass das Brechgut ebenfalls mit einer geringeren kinetischen Energie bzw. geringeren Impulsen durch die umfangsseitig am Rotor 6 angeordneten und radial von diesem abstehenden Schlagleisten 4 beaufschlagt wird. Dadurch wird eine Erzeugung von Grobkorn innerhalb des vorgegeben Zeitraums weiter begünstigt.

## Patentansprüche

1. Verfahren zur Klemmkornabreinigung bei Brechern, wobei Brechgut über einen Zuförderstrom (1) einem Brechwerkzeug zugeführt und von dort über ein Sieb (7) in einen durch das Sieb (7) durchtretenden Abförderstrom (8) und in einen vom Sieb (7) zurückgehaltenen, in den Zuförderstrom (1) unter Ausbildung eines Förderkreislaufs (9) rückgeführten Rückführstrom (10) aufgeteilt wird, wobei im Förderkreislauf (9) und / oder im Abförderstrom (8) abschnittsweise in vorgegebenen Zeitschritten die Korngrößenverteilung und / oder das Materialvolumen bestimmt wird und beim Abweichen von Korngrößenverteilung und / oder Materialvolumen über einen vorgegebenen Grenzwert die durch das Brechwerkzeug erzeugte Korngröße für einen vorgegebenen Zeitraum vergrößert wird.

2. Verfahren nach Anspruch 1, wobei beim Abweichen von Korngrößenverteilung und / oder Materialvolumen über einen vorgegebenen Grenzwert die Zufördergeschwindigkeit innerhalb des vorgegebenen Zeitraumes verringert wird.

3. Verfahren nach Anspruch 1 oder 2, wobei beim Abweichen von Korngrößenverteilung und / oder Materialvolumen über einen vorgegebenen Grenzwert die Rotordrehzahl des Brechers innerhalb des vorgegebenen Zeitraumes verringert wird.

4. Verfahren nach einem der Ansprüche 1 bis 3, wobei abschnittsweise ein Tiefenbild des Förderkreislaufs (9) und / oder des Abförderstromes (8) mit einem Tiefensensor erfasst wird, wobei das erfasste zweidimensionale Tiefenbild einem vorab trainierten, faltenden neuronalen Netzwerk zugeführt wird, das wenigstens drei hintereinanderliegende Faltungsebenen aufweist, denen je Klasse einer Korngrößenverteilung ein Mengenklassifizierer und / oder ein Volumenklassifizierer nachgelagert ist und wobei die Ausgangswerte von Mengenklassifizierer und / oder Volumenklassifizierer als die im Erfassungsbereich vorhandene als Korngrößenverteilung und / oder als Materialvolumen ausgegeben werden.

5. Verfahren nach Anspruch 4, wobei aus dem Tiefenbild die Werte jener Bildpunkte entfernt werden, deren Tiefe einem vorab erfassten Abstand zwischen Tiefensensor und einem Hintergrund für diesen Bildpunkt entspricht oder diesen Abstand überschreitet.

6. Verfahren zum Trainieren eines neuronalen Netzwerks für ein Verfahren nach einem der Ansprüche 4 bis 5, wobei zunächst Beispieltiefenbilder je eines Beispielkornes mit bekanntem Volumen erfasst und gemeinsam mit dem Volumen abgespeichert werden, wonach mehrere Beispieltiefenbilder zufällig zu einem Trainingstiefenbild zusammengesetzt werden, dem als Korngrößenverteilung die klassenweise Verteilung der Materialvolumina der zusammengesetzten Beispieltiefenbilder und / oder als Materialvolumen die Summe der Volumina der zusammengesetzten Beispieltiefenbilder zugeordnet wird, wonach das Trainingstiefenbild eingangsseitig und die zugeordnete Korngrößenverteilung und / oder das zugeordnete Materialvolumen ausgangsseitig dem neuronalen Netzwerk zugeführt und die Gewichte der einzelnen Netzwerkknoten in einem Lernschritt angepasst werden.

7. Verfahren nach Anspruch 6, wobei die Beispieltiefenbilder mit zufälliger Ausrichtung zu einem Trainingstiefenbild zusammengesetzt werden.

8. Verfahren nach Anspruch 6 oder 7, wobei die Beispieltiefenbilder mit teilweisen Überlappungen zu einem Trainingstiefenbild zusammengesetzt werden, wobei der Tiefenwert des Trainingstiefenbilds im Überlappungsbereich der geringsten Tiefe beider Beispieltiefenbilder entspricht.

## Claims

1. Method for cleaning blocking-grains in crushers, wherein material to be crushed is fed to a crushing tool via a feed stream (1) and is separated from there via a screen (7) into a conveyor stream (8) passing through the screen (7) and into a return stream (10) retained by the screen (7) and returned to the feed stream (1), thereby forming a conveying circuit (9), wherein the grain size distribution and/or the material volume is determined in predetermined time steps in parts of the conveying circuit (9) and/or in the conveyor stream (8), and if the grain size distribution and/or material volume deviate above a predetermined limit value, the grain size produced by the crushing tool is increased for a predetermined period of time.

2. Method according to claim 1, wherein in case of deviation of grain size distribution and/or material volume above a predetermined limit value, the feed speed is reduced within the predetermined period of time.

3. Method according to claim 1 or 2, wherein in case of deviation of grain size distribution and/or material volume above a predetermined limit value, the rotor speed of the crusher is reduced within the predetermined period of time.

4. Method according to one of the claims 1 to 3, wherein a depth image of the conveying circuit (9) and/or of the conveyor stream (8) is acquired in sections by means of a depth sensor, wherein the acquired two-dimensional depth image is fed to a previously trained convolutional neural network which has at least three convolution layers lying one behind the other, downstream of which, for each class of a grain size distribution, a quantity classifier and/or a volume classifier is arranged, and wherein the output values of quantity classifier and/or volume classifier are output as the grain size distribution and/or as material volume present in the detection area.

5. Method according to claim 4, wherein the values of those pixels are removed from the depth image whose depth corresponds to a previously detected distance between depth sensor and a background for this pixel or exceeds this distance.

6. Method for training a neural network for a method according to one of claims 4 to 5, wherein firstly sample depth images of a respective sample grain with a known volume are acquired and stored together with the volume, whereupon a plurality of sample depth images are randomly combined to form a training depth image, to which the class-wise distribution of the material volumes of the combined sample depth images is assigned as grain size distribution and/or the sum of the volumes of the combined sample depth images is assigned as material volume, whereupon the training depth image is fed to the neural network on the input side and the assigned grain size distribution and/or the assigned material volume are fed to the neural network on the output side, and the weights of the individual network nodes are adapted in a learning step.

7. Method according to claim 6, wherein the sample depth images with random alignment are combined to form a training depth image.

8. Method according to claim 6 or 7, wherein the sample depth images with partial overlaps are combined to form a training depth image, wherein the depth value of the training depth image in the overlap region corresponds to the smallest depth of both sample depth images.

## Revendications

1. Procédé de nettoyage des grains coincés dans des concasseurs, dans lequel le matériau à concasser est acheminé vers un outil de concassage via un flux d'alimentation (1) et, de là, est divisé via un tamis (7) en un flux de sortie (8) traversant le tamis (7) et dans un flux de retour (10) retenu par le tamis (7) et renvoyé dans le flux d'alimentation (1) en formant un circuit de transport (9), dans lequel la distribution granulométrique et/ou le volume de matière étant déterminés par sections, à intervalles de temps prédéfinis, dans le circuit de transport (9) et/ou dans le flux de sortie (8), et en cas d'écart au-dessus d'une valeur limite prédéfinie pour la distribution granulométrique et/ou le volume de matière, la granulométrie produite par l'outil de concassage est augmentée pendant une période de temps prédéfinie.

2. Procédé selon la revendication 1, dans lequel, en cas d'écart de la distribution granulométrique et/ou du volume de matière au-dessus d'une valeur limite prédéfinie, la vitesse d'alimentation est réduite pendant la période prédéfinie.

3. Procédé selon la revendication 1 ou 2, dans lequel, en cas d'écart de la distribution granulométrique et/ou du volume de matière au-dessus d'une valeur limite prédéfinie, la vitesse de rotation du rotor du concasseur est réduite pendant la période prédéfinie.

4. Procédé selon l'une des revendications 1 à 3, dans lequel une image en profondeur du circuit de transport (9) et/ou du flux de sortie (8) est capturée par sections à l'aide d'un capteur de profondeur, l'image en profondeur bidimensionnelle capturée étant transmise à un réseau neuronal convolutif préalablement entraîné, qui comporte au moins trois niveaux de convolution successifs, en aval desquels est placé, pour chaque classe d'une distribution granulométrique, un classificateur de quantité et/ou un classificateur de volume, et dans lequel les valeurs de sortie du classificateur de quantité et/ou du classificateur de volume sont fournies sous forme de distribution granulométrique et/ou de volume de matière présents dans la zone de détection.

5. Procédé selon la revendication 4, dans lequel les valeurs des pixels dont la profondeur correspond à une distance préalablement détectée entre le capteur de profondeur et un arrière-plan pour ce pixel, ou dépasse cette distance, sont supprimées de l'image de profondeur.

6. Procédé d'entraînement d'un réseau neuronal pour un procédé selon l'une des revendications 4 à 5, dans lequel on acquiert d'abord des images de profondeur d'exemple pour chaque grain d'exemple de volume connu et on les enregistre conjointement avec le volume, après quoi plusieurs images de profondeur d'exemple sont assemblées de manière aléatoire pour former une image de profondeur d'apprentissage, à laquelle on associe, comme distribution granulométrique, la distribution par classe des volumes de matière des images de profondeur d'exemple assemblées et / ou comme volume de matière, la somme des volumes des images de profondeur d'exemple assemblées, après quoi l'image de profondeur d'apprentissage est fournie en entrée au réseau neuronal et la distribution granulométrique associée et/ou le volume de matière associé est fourni(e) en sortie, et les poids des différents nœuds du réseau sont ajustés au cours d'une étape d'apprentissage.

7. Procédé selon la revendication 6, dans lequel les images de profondeur d'exemple sont assemblées avec une orientation aléatoire pour former une image de profondeur d'apprentissage.

8. Procédé selon la revendication 6 ou 7, dans lequel les images de profondeur d'exemple sont assemblées avec des chevauchements partiels pour former une image de profondeur d'apprentissage, la valeur de profondeur de l'image de profondeur d'apprentissage correspondant à la profondeur la plus faible des deux images de profondeur d'exemple dans la zone de chevauchement.
